# EUROPEAN PATENT SPECIFICATION

(11) **EP 1 785 355 B1**
(45) Date of publication and mention of the grant of the patent: **29.07.2009**
(21) Application number: 05425782.9
(22) Date of filing: 09.11.2005
(51) Int. Cl.: B65B 51/30, B65B 9/20

(54) **Packaging unit for continuously producing sealed packages of pourable food products from a tube of packaging material**
Verpackungsmaschine zum kontinuierlichen Herstellen von versiegelten Verpackungen fliessfähiger Nahrungsmittel aus schlauchförmigem Verpackungsmaterial
Machine d'emballage pour produire en continu des emballages scellés contenant un produit alimentaire sous forme liquide, dans un matériau tubulaire

(43) Date of publication of application: 16.05.2007
(73) Proprietor: Tetra Laval Holdings & Finance SA, 1009 Pully (CH)
(72) Inventor: Fontanazzi, Paolo, 41100 Modena (IT); Catellani, Andrea, 41100 Modena (IT); Pradelli, Massimo, 42100 Reggio Emilia (IT); Santi, Franco, 41100 Modena (IT); Boccolari, Stefano, 41100 Modena (IT)
(74) Representative: D'Angelo, Fabio

(56) References cited:
- EP-A- 0 887 263
- EP-A- 0 887 273
- EP-A- 1 234 772
- WO-A-02/090187
- US-A- 4 109 792
- US-B1- 6 625 517

## Description

The present invention relates to a packaging unit for continuously producing sealed packages of pourable food products from a tube of packaging material.

Many pourable food products, such as fruit juice, pasteurized or UHT (ultra-high-temperature treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing laminated strip packaging material. The laminated packaging material comprises layers of fibrous material, e.g. paper, covered on both sides with thermoplastic material, e.g. polyethylene. In the case of packages for long-storage products (such as UHT milk), the side of the packaging material eventually contacting the food product also has a layer of barrier material, e.g. aluminium foil, which in turn is covered with a layer of thermoplastic material.

As is known, packages of this sort are produced on fully automatic packaging machines, on which a continuous tube is formed from the web-fed packaging material; the web of packaging material is sterilized on the packaging machine, e.g. by applying a chemical sterilizing agent, such as a hydrogen peroxide solution; once sterilizing is completed, the sterilizing agent is removed, e.g. vaporized by heating, from the surfaces of the packaging material; and the sterilized web of packaging material is maintained in a closed, sterile environment, and is folded and sealed longitudinally to form a tube.

The tube is filled with the sterilized or sterile-processed food product, and is fed into a cavity defined by two chain conveyors for sealing the tube at equally spaced cross sections, and folding the tube mechanically to form respective parallelepiped-shaped packages.

More specifically, the chain conveyors are moved, by means of respective gear reducers powered by a single motor, in opposite directions, so that each travels in the same direction as the tube.

One chain conveyor is equipped with a number of jaws fitted with heating members, and the other with a number of counterjaws fitted with pressure pads.

As the chain conveyors advance, each heating member and relative pressure pad cooperate to tightly grip and heat seal a relative cross section of the tube of packaging material.

The conveyors also comprise respective forming members in the form of half-shells, which interact with each other to fold the tube between two consecutive sealing sections and define the volume of the package being formed.

Once formed and sealed, the packages are separated, at each sealing section, by means of a number of knives fitted to respective jaws or counterjaws of one of the chain conveyors.

Alternatively, the tube may be cut, at each sealing section, after it is sealed and folded.

For the packages to be sealed and folded correctly, precise movement of the chain conveyors with respect to each other must be ensured to prevent positioning errors between each jaw and the corresponding counterjaw, and between corresponding forming members. This is particularly so when the packages are separated by knives fitted to one of the chain conveyors.

For this purpose, according to the solution disclosed for instance, in EP-A-0887263, the jaws and counterjaws have respective engaging members, which engage as the conveyors advance, to lock each jaw to the corresponding counterjaw and so ensure correct movement of the conveyors as described above.

EP-A-0887263 discloses a packaging unit according to the preamble of claim 1.

The Applicant has recently found certain component parts of conveyors of the above type to be subject to overloading and unpredictable breakage, which tests have shown to be caused by an excessive number of, and a bad arrangement of the constraints imposed on the conveyors.

WO 02/090187 discloses a similar packaging unit in which a second conveyor is driven solely by a first conveyor by an interlocking device.

It is an object of the present invention to provide a packaging unit for continuously producing sealed packages of pourable food products, designed to eliminate the aforementioned drawback typically associated with known units.

According to the present invention, there is provided a packaging unit as claimed in Claim 1.

A preferred embodiment of the present invention will be described by way of example with reference to the accompanying drawings, in which:

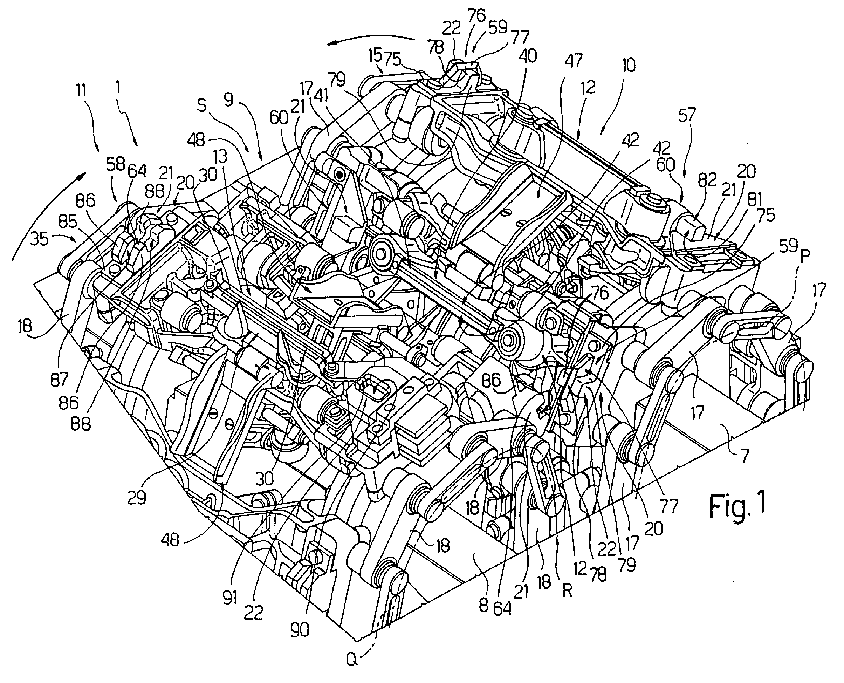

Figure 1 shows a view in perspective of a packaging unit in accordance with the teachings of the present invention;
Figure 2 shows a schematic side view of the Figure 1 unit, with parts removed for clarity.

Number 1 in the accompanying drawings indicates as a whole a packaging unit for continuously producing sealed packages 2 of a pourable food product, such as pasteurized milk or fruit juice, from a tube 3 of packaging material.

Tube 3 is formed in known manner upstream from unit 1 by longitudinally folding and sealing a web of heat-seal sheet material, and is filled, upstream from unit 1, with the sterilized or sterile-processed food product for packaging.

Unit 1 comprises a frame 4, through which tube 3 travels along a path A extending vertically in use; and two conveyors 10, 11 fitted to frame 4 and having, respectively, jaws 12 and counterjaws 13, which cooperate mutually to interact with tube 3.

More specifically, frame 4 is defined by two sides (not shown), and by two parallel transverse walls 7, 8 fixed rigidly between the sides to define a cavity 9 housing conveyors 10, 11.

Conveyors 10, 11 define respective endless paths P, Q, along which jaws 12 and counterjaws 13 travel, and which extend about respective walls 7, 8.

Paths P, Q comprise:
- respective portions P1, Q1, along which jaws 12 and counterjaws 13 approach and impact tube 3;
- respective facing, parallel portions P2, Q2, along which jaws 12 and counterjaws 13 are maintained contacting to form the seals defining packages 2; and
- respective return portions P3, Q3, along which jaws 12 and counterjaws 13 are fed, on the opposite side to tube 3, by respective conveyors 10, 11.

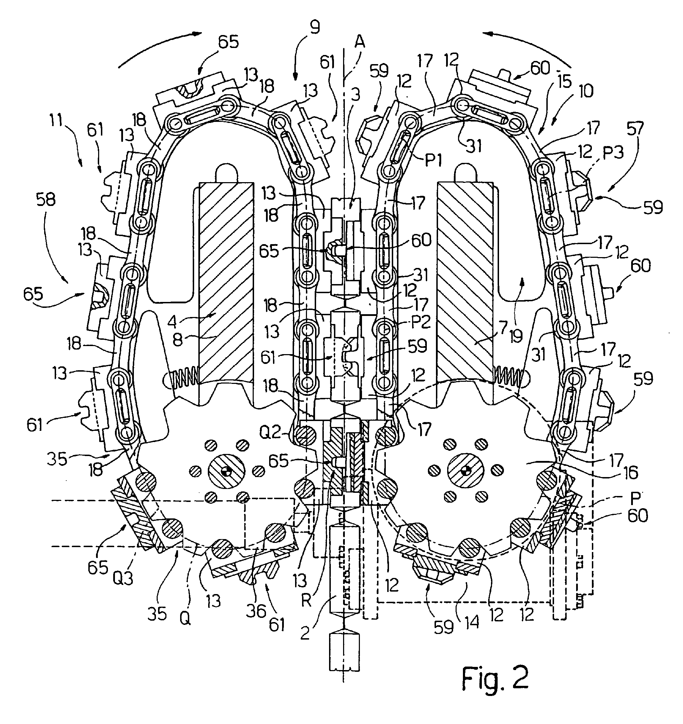

Conveyor 10 comprises an articulated chain 15 extending along path P; and two wheels 16 (only one shown in Figure 2) connected to and driven by a motor 14. More specifically, wheels 16 mesh with chain 15 at a bottom end of portion P2 and on both sides of chain 15.

Conveyor 10 also comprises a cam 19 fitted to wall 7 of frame 4 and for controlling the movement of chain 15 and jaws 12 along path P. Cam 19 is not described in detail, by not being necessary to a clear understanding of the present invention.

Chain 15 comprises, integrally, jaws 12, and a number of rods 17, each pair of which connects each jaw 12 to the two adjacent jaws 12.

Chain 15 therefore defines a number of links, each of which is bounded, parallel to path P, by two consecutive jaws 12, and, alongside path P, by two rods 17.

More specifically, each jaw 12 comprises a main body 20 elongated perpendicularly to path P and connected by two pairs of rods 17 to the respective adjacent jaws 12. Main body 20, on one side, rolls along cam 19 on a number of rollers 31 (only some shown in Figure 2) to guide chain 15 along path P, and, on the opposite side, is fitted with a pressure bar 40 which cooperates with a number of cross sections of tube 3, as explained in detail below.

Like conveyor 10, conveyor 11 comprises an articulated chain 35 extending along path Q and meshing, at a bottom end of portion Q2, with two wheels 36 (only one shown in Figure 2) located on both sides of chain 35.

Conveyor 11 also comprises a cam 37 fitted to wall 8 of frame 4 and for controlling the movement of chain 35 and counterjaws 13 along path Q.

Chain 35 comprises, integrally, counterjaws 13, and a number of rods 18 for connecting each counterjaw 13 to the adjacent counterjaws 13 in articulated manner.

Counterjaws 13 are only described in detail insofar as they differ from jaws 12, and any parts of counterjaws 13 identical or equivalent to those of jaws 12 are indicated using the same reference numbers. Briefly, counterjaws 13 each comprise a main body 20, on which pivot rods 18 connecting adjacent pairs of counterjaws 13.

Instead of a pressure bar 40, each counterjaw 13 comprises a heating member 29, which cooperates with pressure bar 40 of the corresponding jaw 12 to tightly grip a cross section of tube 3.

More specifically, each heating member 29 is an induction type, and comprises two active surfaces 30, which cooperate with the packaging material of tube 3 in opposition to two strips 42 of relatively flexible elastomeric material fitted to a front surface 41 of pressure bar 40.

Chains 15 and 35 also comprise a number of first and second half-shells 47, 48 respectively, which are C-shaped in section crosswise to paths P, Q, and which cooperate frontally to determine the volume of packages 2 being formed.

More specifically, the opposite lateral ends of each half-shell 47 frontally contact a corresponding half-shell 48 to form a substantially parallelepiped-shaped cavity housing a package 2 being formed.

More specifically, each half-shell 47 is hinged to main body 20 of a respective jaw 12 about an axis parallel to main body 20.

Advantageously, conveyor 11 is moved solely by conveyor 10, so as to draw chain 35 and counterjaws 13 along path Q. And this is done by a first engaging assembly 57 on conveyor 10 acting on a second engaging assembly 58 on conveyor 11.

More specifically, first engaging assembly 57 activates second engaging assembly 58 at two actuating regions R, S of conveyor 11, which are located on opposite sides, with respect to tube 3, of each counterjaw 13 interacting with tube 3.

More specifically, first engaging assembly 57 comprises, for each jaw 12, two members 59, 60 fitted to jaw 12, on opposite sides of relative pressure bar 40.

Members 59 and 60 of each jaw 12 are located, with respect to relative pressure bar 40, so that, along path P, members 59 alternate with members 60 at opposite ends 21, 22 of respective jaws 12.

For each counterjaw 13, second engaging assembly 58 comprises a member 61 and a seat 65 fitted to counterjaw 13 on opposite sides of heating member 29.

More specifically, each member 61 has a seat 64 complementary to members 59; and seats 65 are complementary to members 60.

More specifically, member 61 and seat 65 of each counterjaw 13 interact cyclically with member 59 and member 60, respectively, of a corresponding jaw 12 at actuating regions R and S of conveyor 11.

Member 61 and seat 65 are located, with respect to heating member 29, so that, along path Q, members 61 alternate with seats 65 at opposite ends 21, 22 of respective counterjaws 13.

Each member 59 substantially comprises a connecting plate 75 fixed to a front face of relative jaw 12 at end 21 or 22; and a substantially cross-shaped projection 76. More specifically, projection 76 is defined by a portion 77 substantially in the form of an isosceles trapezium with its major base coincident with the surface of plate 75 and having a front edge 78 tapering towards pressure bar 40; and by a transverse portion 79 intersecting portion 77 at the centerline of portion 77.

Each member 60 is substantially prismatic, and projects from main body 20 on the opposite side to cam 19, at end 21 or 22. More specifically, each member 60 comprises a respective prismatic body 81 having a front end edge 82 defined by a central surface parallel to main body 20, and by two end surfaces converging towards respective prismatic body 81.

Each member 61 in turn comprises a respective connecting plate 85 fixed to a front face of end 21 or 22 of relative counterjaw 13; and a respective pair of parallel, substantially trapezoidal projections 86 spaced apart to define a relative seat 87 for receiving portion 77 of a corresponding member 59 in use. On their front side, projections 86 have respective recesses 88 for housing portion 79 of the corresponding member 59, and which, together with seat 87, define seat 64, which is cross-shaped and substantially complementary to projection 76 of member 59.

Seat 65 is defined in main body 20 of counterjaw 13, at end 21 or 22. More specifically, seat 65 has a bottom surface 90 which moves towards front edge 82 of member 60 in the engaged condition; and a lateral surface 91 for loosely receiving prismatic body 81, so that member 60 and seat 65 engage with a certain amount of clearance perpendicular to path A of tube 3.

In actual use, conveyor 10 is driven by motor 14 in the direction indicated in the accompanying drawings, so as to feed tube 3, filled with the pourable food product, along path A inside cavity 9.

By virtue of first engaging assembly 57 acting on second engaging assembly 58, operation of conveyor 10 rotates conveyor 11 in the opposite direction to conveyor 10, as indicated in the accompanying drawings.

More specifically, as conveyor 10 advances, members 59 and 60 of each jaw 12 cyclically engage member 61 and seat 64, respectively, of the corresponding counterjaw 13 at respective actuating regions R, S of conveyor 11.

More specifically, member 59 engages member 61 by inserting projection 76 inside seat 65, so that portion 77 is inserted inside seat 87, and portion 79 moves towards recesses 88, thus locking relative jaw 12 to the corresponding counterjaw 13.

At the same time, member 60 is inserted inside seat 65, so that front edge 82 engages bottom surface 90 to produce a drawing action of jaw 12 on the corresponding counterjaw 13. As member 60 is inserted inside seat 65, prismatic body 81 and lateral surface 91 remain separated by a given clearance perpendicular to path A, to avoid further constraint between jaw 12 and corresponding counterjaw 13.

As conveyor 10 draws along conveyor 11, each jaw 12 and respective counterjaw 13 cooperate cyclically with tube 3 of packaging material at the end of portions P1, Q1 of respective paths P, Q and along respective portions P2, Q2, with a law of motion defined by the profile of relative cams 19, 37.

As each jaw 12 interacts with corresponding counterjaw 13, tube 3 is sealed at equally spaced cross sections by activating heating member 29 and pressure bar 40 in known manner.

As shown in Figure 2, as each jaw 12 interacts with the corresponding counterjaw 13, half-shell 47 and corresponding half-shell 48, located immediately upstream from jaw 12 along path P and from counterjaw 13 along path Q respectively, cooperate with tube 3 to define the volume of package 2 being formed.

The advantages of unit 1 according to the present invention will be clear from the foregoing description.

In particular, conveyor 11 is connected in the best possible way to move chain 35 along path Q, by conveyor 11 being stressed externally solely by conveyor 10, and by first engaging assembly 57 acting on second engaging assembly 58.

More specifically, the presence of two separate actuating regions R, S enables operation of conveyor 11 and mutual locking of jaw 12 and counterjaw 13 without introducing an excessive number of constraints, on account of both operation of conveyor 11 and mutual locking of jaws 12 to counterjaws 13 being performed by first engaging assembly 57 acting on second engaging assembly 58.

As a result, excessive wear and stress of the mechanical parts of conveyors 10, 11, and breakdowns due to an excessive number of constraints on conveyors 10, 11, are eliminated.

Moreover, unit 1 provides for precise operation of conveyors 10, 11 with fewer component parts and more cheaply, by eliminating the need for an independent mechanism for operating conveyor 11.

Clearly, changes may be made to unit 1 as described herein without, however, departing from the scope as defined in the accompanying Claims.

## Claims

1. A packaging unit (1) for continuously producing aseptic sealed packages (2) of a pourable food product from a tube (3) of heat-seal sheet packaging material, said tube (3) being filled with said food product, and said unit comprising a first and a second conveyor (10, 11) comprising first and second jaws (12, 13), respectively, which interact cyclically with said tube (3) to seal a number of cross sections of the tube (3); said first and said second conveyor (10, 11) being driven to cause said first and said second jaws (12, 13), respectively, to interact with said tube (3); said first conveyor (10) being driven by drive means (14) and said second conveyor (11) being driven solely by said first conveyor (10), by first engaging means (57) on said first conveyor (10) acting on second engaging means (58) on said second conveyor (11); said first engaging means (57) activating said second engaging means (58) at a first and second actuating region (R, S) of said second conveyor (11) separate from each other and located on opposite sides of a region in which said first and said second jaws (12, 13) interact cyclically with said tube (3); for each pair of said first and second jaws (12, 13), one (57) of said first and second engaging means (57, 58) having a first and a second projection (76, 60) located at the respective said regions (R, S) and which cooperate with a corresponding first seat (64) and a corresponding second seat (65) on the other (58) of said first and second engaging means (57, 58); **characterized in that** said first projection (76) is substantially cross-shaped, and said second projection (60) is substantially prismatic.

2. A unit as claimed in Claim 1, **characterized in that** one (60) of said first and second projections (76, 60) cooperates with one (65) of said first and second seats (64, 65) with a certain amount of clearance crosswise to a travelling direction (A) of said tube (3).

3. A unit as claimed in Claim 1 or 2, **characterized in that** said first jaws (12) comprise, along the path (P) on which they travel, a number of alternating said first and second projections (76, 60); and **in that** said second jaws (13) comprise, along the path (Q) on which they travel, a number of alternating said first and second seats (64, 65).

4. A unit as claimed in any one of the foregoing Claims, **characterized in that** said second conveyor (11) has a number of heating members (29) to heat seal said tube (3); and **in that** said first conveyor (10) has a number of pressure members (40), each cooperating with a corresponding heating member (29).

## Patentansprüche

1. Verpackungseinheit (1) zum kontinuierlichen Herstellen aseptisch versiegelter Verpackungen (2) für ein schütt- oder fließfähiges Nahrungsmittelprodukt aus einem Schlauch (3) aus heißsiegelbarem bahnförmigen Verpackungsmaterial, wobei der Schlauch (3) mit dem Nahrungsmittelprodukt befüllt wird, und die Einheit einen ersten und einen zweiten Förderer (10, 11) umfasst, umfassend jeweils entsprechend erste und zweite Backen (12, 13), die zyklisch mit dem Schlauch (3) zusammen wirken, um eine Anzahl an Querschnitten des Schlauchs (3) zu versiegeln; wobei der erste und der zweite Förderer (10, 11) angetrieben werden, um die ersten und die zweiten Backen (12, 13) jeweils dazu zu bringen, mit dem Schlauch (3) zusammenzuwirken; wobei der erste Förderer (10) durch Antriebsmittel (14) angetrieben wird und der zweite Förderer (11) ausschließlich durch den ersten Förderer (10) angetrieben wird, durch erste Eingreifmittel (57) auf dem ersten Förderer (10), der auf die zweiten Eingreifmittel (58) an dem zweiten Förderer (11) einwirkt; wobei die ersten Eingreifmittel (57) die zweiten Eingreifmittel (58) in einem ersten und einem zweiten Ansteuerungsbereich (R, S) des zweiten Förderers (11) unabhängig voneinander betätigen und wobei diese an gegenüberliegenden Seiten eines Bereichs angeordnet sind, in dem die ersten und die zweiten Backen (12, 13) zyklisch mit dem Schlauch (3) zusammenwirken; wobei für jedes Paar der ersten und zweiten Backen (12, 13) eines (57) der ersten oder zweiten Eingreifmittel (57, 58) einen ersten und einen zweiten Vorsprung (76, 60) hat, die an den entsprechenden Bereichen (R, S) angeordnet sind und die mit einem korrespondierenden ersten Sitz (64) und einem korrespondierenden zweiten Sitz (65) an dem anderen (58) der ersten und zweiten Eingreifmittel (57, 58) zusammenwirken; **dadurch gekennzeichnet, dass** der erste Vorsprung (76) im Wesentlichen kreuzförmig, und der zweite Vorsprung (60) im Wesentlichen prismatisch ist.

2. Einheit nach Anspruch 1, **dadurch gekennzeichnet, dass** einer (60) der ersten und der zweiten Vorsprünge (76, 60) mit einem (65) der ersten und der zweiten Sitze (64, 65) mit einem bestimmten Betrag an Spiel quer zur Bewegungsrichtung (A) des Schlauchs (3) zusammenwirkt.

3. Einheit nach einem der Ansprüche 1 oder 2, **dadurch gekennzeichnet, dass** die ersten Backen (12) entlang dem Pfad (P) auf dem sie sich bewegen, eine Anzahl an sich abwechselnden ersten und zweiten Vorsprüngen (76, 60) umfassen; und dass die zweiten Backen (13) entlang dem Pfad (Q) auf dem sie sich bewegen, eine Anzahl an sich abwechselnden ersten und zweiten Sitzen (64, 65) umfassen.

4. Einheit nach einem der vorhergehenden Ansprüche, **dadurch gekennzeichnet, dass** der zweite Förderer (11) eine Anzahl an Heizelementen (29) hat, um den Schlauch (3) heißzusiegeln; und dass der erste Förderer (10) eine Anzahl an Druckelementen (40) hat, wobei jedes mit einem korrespondierendem Heizelement (29) zusammenwirkt.

## Revendications

1. Machine d'emballage (1) pour produire en continu des emballages scellés aseptiques (2) d'un produit alimentaire fluide à partir d'un tube (3) de matériau d'emballage en feuille thermosoudable, le dit tube (3) étant rempli avec le dit produit alimentaire, et la dite unité comprenant un premier et un deuxième convoyeurs (10, 11) comportant des premières et deuxièmes mâchoires (12, 13) respectivement, qui interagissent cycliquement avec le dit tube (3) pour souder une pluralité de sections transversales du tube (3) ; les dits premier et deuxième convoyeurs (10, 11) étant entraînés pour provoquer une interaction des dites premières et deuxièmes mâchoires (12, 13), respectivement, avec le dit tube (3) ; le dit premier convoyeur (10) étant entraîné par des moyens d'entraînement (14) et le dit deuxième convoyeur (11) étant entraîné seulement par le dit premier convoyeur (10), par l'intermédiaire de premiers moyens de couplage (55) prévus sur le dit premier convoyeur (10) et agissent sur des deuxièmes moyens de couplage (58) prévus sur le dit deuxième convoyeur (11) ; les dits premiers moyens de couplage (57) activant les dits deuxièmes moyens de couplage (58) à l'endroit d'une première et d'une deuxième régions d'activation (R, S) du dit deuxième convoyeur (11) séparées l'une de l'autre et situées sur des côtés opposés d'une région dans laquelle les dites premières et deuxièmes mâchoires (12, 13) interagissent cycliquement avec le dit tube (3) ; pour chaque paire des dites premières et deuxièmes mâchoires (12, 13), un (57) des dits premiers et deuxièmes moyens de couplage (57, 58) présentant une première et une deuxième saillies (76, 60) situées aux dites régions respectives (R, S) et qui coopèrent avec un premier siège correspondant (64) et un deuxième siège correspondant (65) sur l'autre (58) des dits premiers et deuxièmes moyens de couplage (57, 58) ; **caractérisée en ce que** la dite première saillie (76) est sensiblement cruciforme et la dite deuxième saillie (60) est sensiblement prismatique.

2. Machine selon la revendication 1, **caractérisée en ce qu'**une (60) des dites première et deuxième saillies (76, 60) coopère avec un (65) des dits premier et deuxième sièges (64, 65) avec une certaine grandeur de jeu transversalement à une direction de déplacement (A) du dit tube (3).

3. Machine selon la revendication 1 ou 2, **caractérisée en ce que** les dites premières mâchoires (12) comprennent, le long du chemin (P) sur lequel elles se déplacent, un certain nombre de dites premières et deuxièmes saillies (76, 60) en alternance ; et **en ce que** les dites deuxièmes mâchoires (13) comprennent, le long du chemin (Q) sur lequel elles se déplacent, un certain nombre de dits premiers et deuxièmes sièges (64, 65) en alternance.

4. Machine selon une quelconque des revendications précédentes, **caractérisée en ce que** le dit deuxième convoyeur (11) comporte un certain nombre d'éléments chauffants (29) pour thermosouder le dit tube (3) ; et **en ce que** le dit premier convoyeur (10) comporte un certain nombre d'éléments de pression (40), coopérant chacun avec un élément chauffant correspondant (29).
